# EUROPÄISCHE PATENTANMELDUNG

(11) **EP 1 231 188 A1**
(43) Veröffentlichungstag der Anmeldung: **14.08.2002**
(21) Anmeldenummer: 01103011.1
(22) Anmeldetag: 08.02.2001
(51) Int. Cl.: C03B 35/04

(54) **Werkstückträger für den Transport von Glasgefaessen**

(71) Anmelder: Heinz Glas GmbH, 96355 Kleintettau (DE)
(72) Erfinder: Müller, Franz, 96317 Kronach (DE)
(74) Vertreter: Zipse & Habersack

(57) **Zusammenfassung**

Beschrieben werden Werkstückträger (1) für den Transport von Glasgefäßen (2) vom Ausformort durch den Kühlofen zur Verpakkung, wobei zumindest die Teile der Werkstückträger (1), die mit den Glasgefäßen (2) in Kontakt treten, aus Glas bestehen.

## Beschreibung

### Technisches Gebiet

Die vorliegende Erfindung betrifft Werkstückträger für den Transport von Glasgefäßen und ein Verfahren zum Transport von Glasgefäßen vom Ausformort durch den Kühlofen zur Verpackung.

### Stand der Technik

Flaschen und Behälter, insbesondere für die Kosmetikindustrie, haben unterschiedlichste Größen und Formen. Soweit sie genügend Standfestigkeit besitzen, werden sie, von den Fertigungsstationen einer Produktionsmaschine kommend, unmittelbar auf dem Kettenband eines Transportsystems aufgestellt, das sie durch den Kühlofen zur Verpackung führt. Dabei kommt es nicht selten zum Umfallen und zu Bruch der Glasgefäße, so dass die sogenannte Ausbringung, d.h. das Verhältnis von Brutto-Produktion zum Nettoergebnis unwirtschaftlich ist.

Zur Lösung diese Problems wurden aus Keramik gefertigte Werkstückträger eingeführt, die eine Verbesserung der Standfestigkeit der Glasgefäße bewirken. Die EP-A-0 908 419 beschreibt z.B. Keramikwerkstückträger, deren Form an die Form der Glasgefäße, die von dem Werkstückträger aufgenommen werden sollen, angepasst ist. Keramikwerkstückträger werden auch insbesondere bei der Fertigung von Glasgefäßen ohne eigene Standfestigkeit eingesetzt.

Als nachteilig hat sich herausgestellt, dass diese Keramikwerkstückträger in der Fertigung sehr hohe Kosten verursachen und zudem aufgrund häufigen Bruchs oft erneuert werden müssen.

### Darstellung der Erfindung

Aufgabe der vorliegenden Erfindung ist es, einen Werkstückträger für den Transport von Glasgefäßen vom Ausformort durch den Kühlofen zur Verpackung zur Verfügung zu stellen, durch den eine wirtschaftlichere Herstellung und insbesondere eine erhöhte Ausbringung von Glasgefäßen erreicht werden kann.

Diese Aufgabe wird erfindungsgemäß durch den Werkstückträger gemäß unabhängigem Patentanspruch 1 und das Verfahren zum Transport von Glasgefäßen gemäß unabhängigem Patentanspruch 9 gelöst. Weitere Details, Aspekte und bevorzugte Ausführungsformen der vorliegenden Erfindung ergeben sich aus der Beschreibung, den abhängigen Ansprüchen, den Figuren und den Beispielen.

Bei dem erfindungsgemäßen Werkstückträger für den Transport von Glasgefäßen vom Ausformort durch den Kühlofen zur Verpackung bestehen zumindest die Teile, die mit den Glasgefäßen in Kontakt treten, aus Glas, insbesondere Borosilikatglas.

Im Rahmen der vorliegenden Erfindung wird unter dem Begriff "Ausformort" der Ort verstanden, an dem die Glasgefäße, die durch den Kühlofen zur Verpackung transportiert werden sollen, ausgeformt werden. Die Ausformung kann dabei maschinell in einer Produktionsmaschine erfolgen, d. h. im Falle blasgepresster Glasgefäße durch Blasen des Glases unter Verwendung von Herstellformen.

Der Werkstoff Glas besitzt, ebenso wie Keramik, einen schlechten Wärmeleitungskoeffizienten. Dies hat zur Folge, dass es nicht zu einem punktuellen Wärmeentzug und damit zu Rissfehlern in den transportierten Glasgefäßen kommt. Solche Rissfehler treten sehr häufig auf, wenn die ca. 550°C heißen Glasgefäße unmittelbar nach dem Ausformen auf dem Metallband eines Transportsystems aufgestellt werden. Der hohe Wärmeleitungskoeffizient von Metall bewirkt einen punktuellen Wärmeentzug und damit die beschriebenen Probleme.

Werkstückträger, bei denen die mit den Glasgefäßen in Kontakt tretenden Teile aus Glas gefertigt sind, lösen die geschilderte Problematik ebenso zur Zufriedenheit wie Werkstückträger aus Keramik. Darüber hinaus sind die erfindungsgemäßen Werkstückträger aber erheblich billiger herzustellen als die Keramikwerkstückträger.

Dieser Vorteil kommt ganz besonders deutlich zum Ausdruck, wenn die Werkstückträger vollständig aus Glas gefertigt sind. Glasbehälter sind nämlich wesentlich preiswerter herzustellen als Keramikbehälter. Werkstückträger für den Transport von Glasgefäßen vom Ausformort durch den Kühlofen zur Verpackung, die vollständig aus Glas bestehen, stellen daher eine besonders bevorzugte Ausführungsform der vorliegenden Erfindung dar.

Ein weiterer, mit den bisher verwendeten Keramikwerkstückträgern verbundener Nachteil wird durch die Werkstückträger gemäß der vorliegenden Erfindung ebenfalls behoben: Keramik besitzt die Eigenschaft einer schlechten Wechseltemperaturbeständigkeit. Beim Transport der Glasgefäße vom Ausformort durch den Kühlofen zur Verpackung sind aber die Werkstückträger fortlaufend extremen Temperaturschwankungen unterworfen. Dies führt bei Verwendung von Keramikmaterial nach einer gewissen Zeit zu Rissen und zu Bruch und macht daher einen häufigen Austausch erforderlich. Im Gegensatz dazu können Werkstückträger gemäß einer besonders bevorzugten Ausführungsform der vorliegenden Erfindung aus Glas gefertigt werden, das eine Wechseltemperaturbeständigkeit bis zu ca. 600°C aufweist. Die während des Transports der Glasgefäße auftretenden Temperaturschwankungen stellen somit kein Problem dar.

Gemäß einer weiteren, ganz besonders bevorzugten Ausführungsform der vorliegenden Erfindung ist der Werkstückträger vollständig aus Glas gefertigt, dessen Zusammensetzung im wesentlichen der Zusammensetzung der Glasgefäße entspricht, die mit Hilfe des Werkstückträgers transportiert werden. Mit dieser Ausführungsform ist der besondere Vorteil verbunden, dass die Werkstückträger in die Glasschmelze rückgeführt werden können. Dies wird insbesondere dann geschehen, wenn der Werkstückträger selbst zu Bruch geht oder Risse aufweist. Selbstverständlich besteht aber auch die Möglichkeit bei Bruch oder fehlerhaften Stellen des transportierten Glasgefäßes, das Glasgefäß zusammen mit dem Werkstückträger in die Glasschmelze rückzuführen. Bisher mussten die Glasteile vor der Rückführung von den Keramikwerkstoffträgern getrennt werden, was einen erheblich höheren Aufwand darstellt als die gemeinsame Rückführung in die Schmelze.

Wie bereits beschrieben, ist diese gemeinsame Rückführung nur möglich, wenn die Zusammensetzung des Werkstückträgers im wesentlichen der Zusammensetzung der transportierten Glasgefäße entspricht. Insbesondere darf der Werkstückträger keine Zusätze enthalten, die die Glasschmelze über die zulässige Bandbreite verunreinigen würden was durch die Keramik als Werkstückträger geschehen könnte.

Der erfindungsgemäße Werkstückträger kann grundsätzlich jede beliebige Form besitzen. Falls die Glasgefäße selbst genügend Standfestigkeit aufweisen, kann der Werkstückträger auch die Form einer Platte haben. Vorteilhaft ist es aber, wenn der Werkstückträger wenigstens einen Hohlraum aufweist, der zur Aufnahme eines Glasgefäßes geeignet ist. In diesem Fall können beliebig geformte Glasgefäße durch den Werkstückträger transportiert werden.
In der Regel wird der Werkstückträger einen Hohlraum aufweisen, der zur Aufnahme eines Glasgefäßes geeignet ist. Es kann aber auch vorteilhaft sein, Werkstückträger zu verwenden, die mehrere Hohlräume aufweisen, wobei jeder Hohlraum zur Aufnahme eines Glasgefäßes geeignet ist. Dies kann insbesondere dann angezeigt sein, wenn sehr kleine Glasgefäße in großer Stückzahl transportiert werden sollen.

Die Werkstückträger weisen gemäß einer besonders vorteilhaften Ausführungsform der vorliegenden Erfindung einen oder mehrere Hohlräume auf, wobei die Form jedes Hohlraums an die Form des darin aufzunehmenden Glasgefäßes angepasst ist. Durch die Anpassung der Form wird eine ganz besonders hohe Standfestigkeit der Anordnung aus Werkstückträger und Glasgefäß erreicht.

Daneben besteht die Möglichkeit, Glasgefäße aus der laufenden Produktion als Werkstückträger zu verwenden, wenn deren Form gerade geeignet ist, andere Glasgefäße sicher tragen zu können.

Gemäß einer weiteren vorteilhaften Ausführungsform der vorliegenden Erfindung ist der Werkstückträger aus transparentem Glas gefertigt. Mit dieser Ausführungsform ist der Vorteil verbunden, dass die transportierten Glasteile bereits während des Transports manuell oder automatisch auf Fehler untersucht werden können. Diese Möglichkeit besteht bei undurchsichtigen Werkstückträgern aus Keramik nicht.

Die vorliegende Erfindung umfasst auch ein Verfahren zum Transport von Glasgefäßen vom Ausformort durch den Kühlofen zur Verpackung, das die Schritte Aufbringen des Glasgefäßes auf einen erfindungsgemäßen Werkstückträger, Befördern des Werkstückträgers mit Glasgefäß durch den Kühlofen zur Verpackung und Lösen des Werkstückträgers von dem Glasgefäß umfasst.

Grundsätzlich kann der Werkstückträger nach dem Lösen des Glasgefäßes auf dem Transportsystem verbleiben. In diesem Fall braucht das nächste Glasgefäß nur auf den Werkstückträger aufgesetzt zu werden. Das Glasgefäß kann aber zunächst auch getrennt von dem Transportsystem auf den Werkstückträger aufgesetzt werden und dann anschließend gemeinsam mit dem Werkstückträger auf das Transportsystem überführt werden.

In einer besonders vorteilhaften Ausführungsform des erfindungsgemäßen Verfahrens wird der Werkstückträger in die Glasschmelze rückgeführt. Diese Rückführung kann gemeinsam mit dem transportierten Glasgefäß erfolgen oder ohne das Glasgefäß und wird insbesondere dann erfolgen, wenn Glasgefäß oder Werkstückträger zu Bruch gegangen sind oder andere Fehler aufweisen.

### Wege zur Ausführung der Erfindung

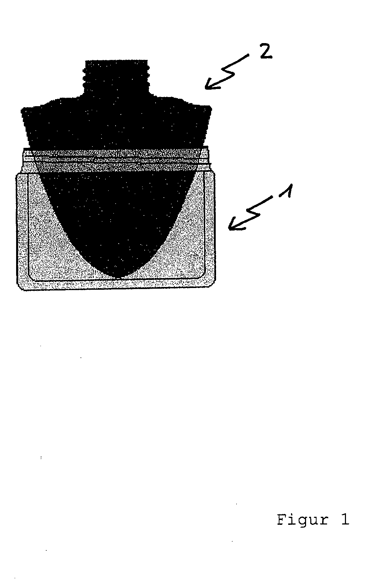

In den Figuren 1 bis 3 sind als Beispiele für Glasgefäße, die mit den erfindungsgemäßen Werkstückträgern transportiert werden können, Flaschen für Kosmetikartikel dargestellt. Der Werkstückträger 1 besteht in jedem Fall vollständig aus Glas und weist einen Hohlraum zur Aufnahme eines Glasgefäßes 2 auf.

Die Figur 1 zeigt eine kegelförmige Flasche 2, die sich zum Teil in dem Hohlraum des Werkstückträgers 1 befindet. Die Flasche 2 an sich weist aufgrund ihrer Form keinerlei Standfestigkeit auf. Erst das Einbringen in den Werkstückträger 1 ermöglicht einen Transport der Glasflasche 2 auf einem (nicht dargestellten) Kettenband.

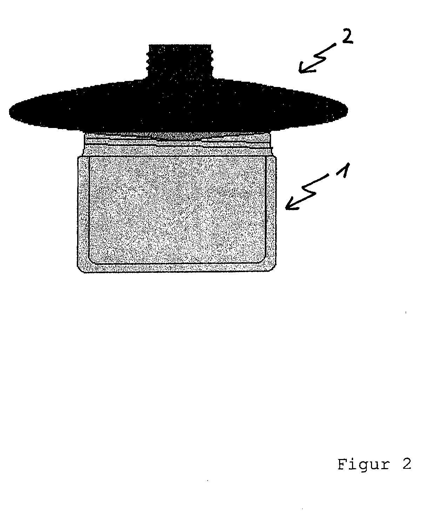

Figur 2 zeigt eine extrem bauchige Glasflasche 2, die nur zu einem geringen Teil in den Hohlraum des Werkstückträgers 1 hineinragt. Trotzdem weist die Flasche 2 eine genügende Standfestigkeit auf, da eine ausreichende Auflagefläche auf dem oberen Rand des Werkstückträgers 1 vorhanden ist.

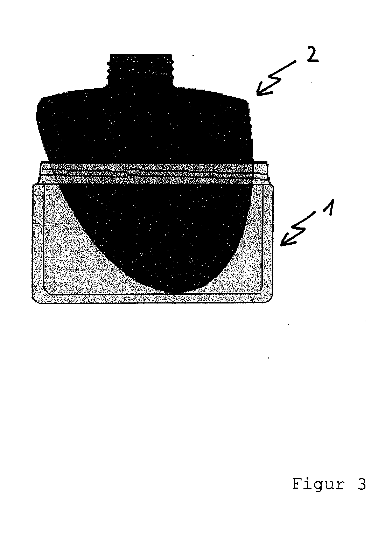

Die Figur 3 zeigt eine herzförmige Glasflasche 2 für Kosmetikartikel, die aufgrund ihrer Form keinerlei Standfestigkeit aufweist. Die herzförmige Falsche 2 befindet sich zum Teil in dem Hohlraum des Werkstückträgers 1, dessen Größe der Form der Falsche 2 angepasst ist. Die Flasche 2 erhält dadurch hinreichende Standfestigkeit.

## Patentansprüche

1. Werkstückträger für den Transport von Glasgefäßen (2) vom Ausformort durch den Kühlofen zur Verpackung,
**dadurch gekennzeichnet, dass** zumindest die mit den Glasgefäßen (2) in Kontakt tretenden Teile des Werkstückträgers (1) aus Glas, insbesondere Borosilikatglas bestehen.

2. Werkstückträger nach Anspruch 1,
**dadurch gekennzeichnet, dass** der Werkstückträger (1) insgesamt aus Glas besteht.

3. Werkstückträger nach Anspruch 1 oder 2,
**dadurch gekennzeichnet, dass** der Werkstückträger (1) aus Glas gefertigt ist, das eine Wechseltemperaturbeständigkeit bis ca. 600°C aufweist.

4. Werkstückträger nach Anspruch 2 oder 3 ,
**dadurch gekennzeichnet, dass** der Werkstückträger (1) aus Glas gefertigt ist, dessen Zusammensetzung im wesentlichen der Zusammensetzung der Glasgefäße (2) entspricht.

5. Werkstückträger nach einem der vorhergehenden Ansprüche,
**dadurch gekennzeichnet, dass** der Werkstückträger (1) wenigstens einen Hohlraum aufweist, der zur Aufnahme eines Glasgefäßes (2) geeignet ist.

6. Werkstückträger nach Anspruch 5,
**dadurch gekennzeichnet, dass** der Werkstückträger (1) mehrere Hohlräume aufweist, wobei jeder Hohlraum zur Aufnahme eines Glasgefäßes (2) geeignet ist.

7. Werkstückträger nach den Ansprüchen 5 oder 6,
**dadurch gekennzeichnet, dass** die Form jedes Hohlraums an die Form des darin aufzunehmenden Glasgefäßes (1) angepasst ist.

8. Werkstückträger (1) nach einem der vorhergehenden Ansprüche,
**dadurch gekennzeichnet, dass** der Werkstückträger (1) aus transparentem Glas gefertigt ist.

9. Verfahren zum Transport von Glasgefäßen vom Ausformort durch den Kühlofen zur Verpackung, **gekennzeichnet durch** die Verfahrensschritte
a) Aufsetzten des Glasgefäßes (2) auf einen Werkstückträger (1) wie in den Ansprüchen 1 bis 8 definiert,
b) Befördern des Werkstückträgers (1) mit Glasgefäß (2) **durch** den Kühlofen zur Verpackung,
c) Lösen des Werkstückträgers (1) von dem Glasgefäß (2).

10. Verfahren nach Anspruch 9, wobei nach Schritt a) und vor Schritt b) der Schritt
Überführen des Werkstückträgers (1) mit Glasgefäß (2) auf ein Transportsystem durchgeführt wird.

11. Verfahren nach Anspruch 9 oder 10, wobei nach Schritt c) der Schritt
Rückführen des Werkstückträgers (1) in die Glasschmelze durchgeführt wird.
